# EUROPEAN PATENT SPECIFICATION

(11) **EP 3 927 619 B1**
(45) Date of publication and mention of the grant of the patent: **07.06.2023**
(21) Application number: 20715971.6
(22) Date of filing: 19.02.2020
(51) Int. Cl.: B64C 39/02, B64D 37/04, B64D 47/08, B64C 1/26

(54) **AIRCRAFT FOR PERFORMING OBSERVATIONS IN THE STRATOSPHERE**
FLUGZEUG ZUR BEOBACHTUNG IN DER STRATOSPHÀRE
AÉRONEF D'OBSERVATION STRATOSPHÉRIQUE

(30) Priority: 19.02.2019 PL 42897319
(43) Date of publication of application: 29.12.2021
(73) Proprietor: SIEC BADAWCZA LUKASIEWICZ-INSTYTUT LOTNICTWA, 02-256 Warszawa (PL)
(72) Inventor: ZURAWSKI, Rafal, 03-144 Warszawa (PL)
(74) Representative: LDS Lazewski Depo & Partners
(86) International application number: PCT/PL2020/000019
(87) International publication number: WO 2020/171722

(56) References cited:
- WO-A2-2007/132460
- DE-A1-102014 107 316
- FR-A- 953 618
- FR-A1- 2 618 122

## Description

The subject of the invention is aircraft for performing observations in the stratosphere, being an unmanned aircraft equipped with a telescope built in the fuselage for performing astronomic observations, observations of the ground and taking aerial photos.

Patent application WO2017130137 describes various aerial constructions adapted for long-term unmanned flights in the stratosphere as an alternative for satellites in different missions such as observations, weather monitoring, telecommunications and the like. Drone according to this patent application has closed nose part adapted for cargo of different size, including scientific instrumentation and camera. The nose part with camera has a window for observations.

Patent application US4858850 discloses manned aircraft with classic telescope installed on its board. Observations are performed through an open cavity located in the side wall of the fuselage. This solution has been applied in the SOFIA project on board of B-747 to perform observations during flight in the stratosphere. Patent application US5678787 describes a solution wherein the fuselage is equipped with an assembly of side and top doors that allows for opening during flight of the fuselage segment with optical devices for observation of atmospheric and extrasolar phenomena. These solutions necessitate rework of fuselage and application of means reducing turbulences caused by an open cavity. Moreover, they only allow observation of one half-sphere during a flight to one direction.

Patent application GB1290144 discloses an optical device to perform observations through a window made in the side wall of the aircraft fuselage. The device is equipped with a camera of axis of rotation parallel to the longitudinal axis of the fuselage and with angular mirror located in front of the lens with a reflection surface tilted at the angle of 45 degrees to the camera axis. This solution makes it possible to use optical devices for observations of length exceeding the fuselage width.

Patent application US2009251773 discloses various configurations of a telescope integrated with a low-orbit satellite body. According to this solution, subassemblies of the telescope are located in the articulated cylindrical segments of the satellite, wherein the segment with the initial angular mirror has an open cavity for performing observations. This solution cannot be used in aerial construction designed for flights in the earth atmosphere.

The objective of the invention is to simplify the construction of an unmanned stratospheric aircraft with a fuselage integrated with a telescope.

According to the invention, an aircraft for performing observations in the stratosphere is equipped with a telescope built in a fuselage of the aircraft with an initial angular mirror installed in an open part of the fuselage and a main mirror installed in a cylindrical part of the fuselage, wherein the open part of the fuselage represents an open observation cavity with a base made by a bottom arc section of the fuselage rigidly connected with a nose of the aircraft, the main mirror being permanently fixed at an end of the cylindrical part of the fuselage, at a tail of the aircraft, and the initial angular mirror being rotatably fixed to the nose, wherein an axis of rotation of the initial angular mirror overlaps a longitudinal axis of the aircraft and an optical axis of the main mirror, the bottom arc section of the fuselage having a recess for observation of the earth, and a lifting surface of the aircraft being releasably fixed to the cylindrical part of the fuselage.

It is preferred that the initial angular mirror is rotatably fixed in a bearing fixed to the rear part of the nose and controlled using a servomotor installed to the nose.

It is also preferred that the lifting surface is fixed to the fuselage using a split yoke in the shape of a ring, consisting of a separately installed bottom yoke and a top yoke permanently fixed to the cylindrical part of the fuselage.

According to a preferred embodiment, the cylindrical part of the fuselage is made in the form of double-walled fuel tank connected with the aircraft engine supply system. According to this solution, it is preferred that the double-walled fuel tank is connected with a main mirror cooling system using a pump.

Solutions according to the invention are used by the cylindrical fuselage of the aircraft as a telescope tube of length exceeding the fuselage diameter, depending on the focal point of the main mirror. Utilization of the initial angular mirror with configurable position allows for observation of the whole sphere within the range of 360° at a given azimuth. This allows observation of a given object after changing direction of flight to opposite therefore allowing for determining a narrow closed space for research purposes. Application of the unmanned technology allows for optimizing the construction from the standpoint of the performed missions and significant reduction of costs. According to another variation of the aircraft, the fuselage can be made as a double-walled fuel tank and the fuel can be used as a medium cooling the main mirror.

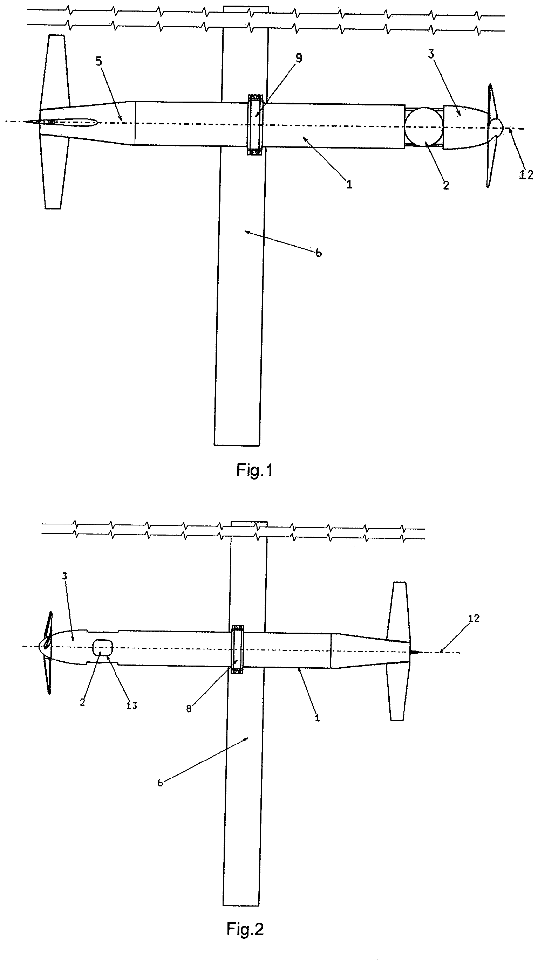

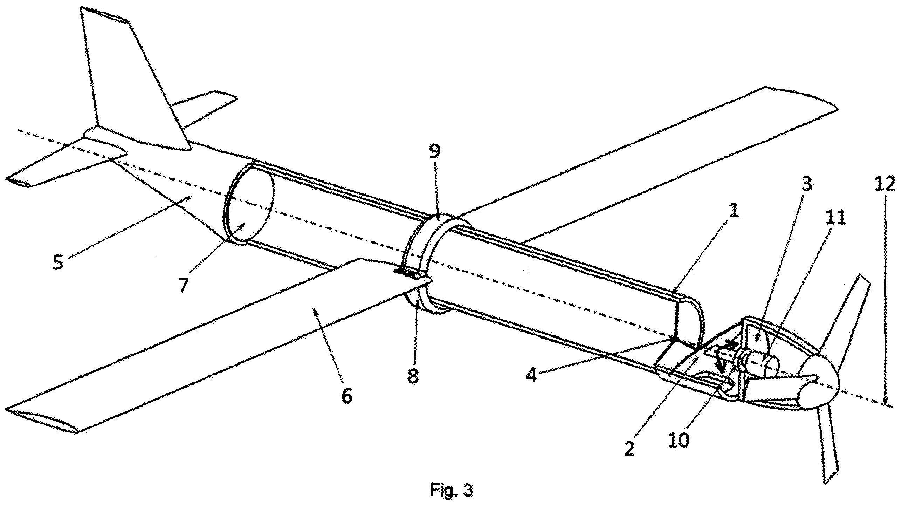

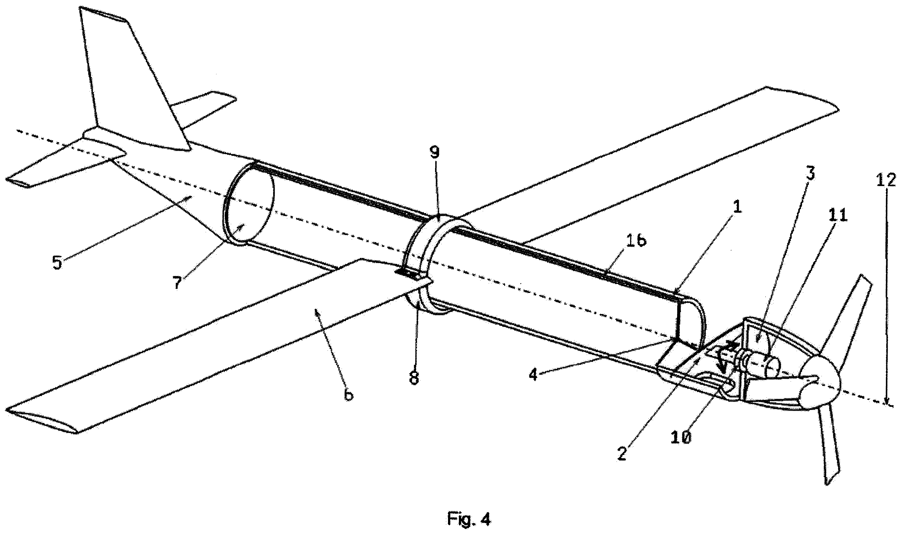

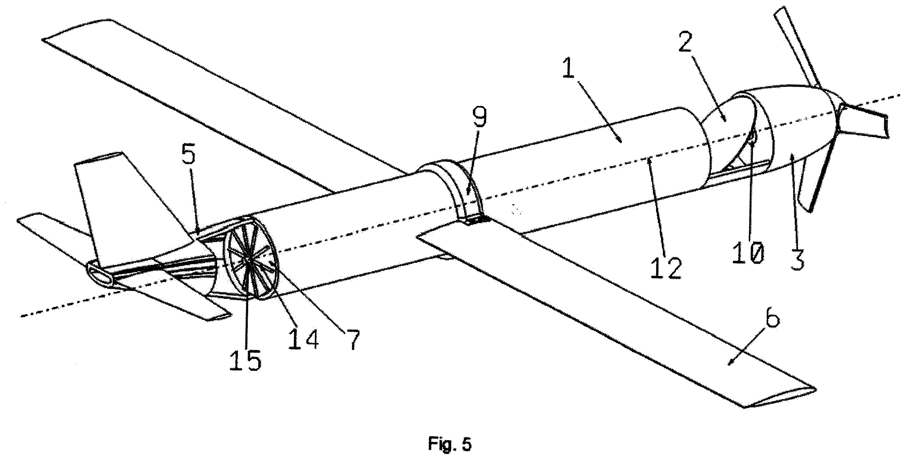

The invention is presented in the embodiment on the drawing, in which fig. 1 presents top view of the aircraft, fig. 2 presents bottom view, fig. 3 presents isometric view of the aircraft with partial cross-section of the nose and fuselage, fig. 4 presents isometric view of a version of the aircraft with partial cross-section of the nose and fuselage, and fig. 5 presents a variation of the aircraft of fig. 4 with partial cross-section of the tail.

As presented in the fig. 1 - 3, the aircraft has a fuselage 1 connected with the nose 3 and tail 5 as well as lifting surface 6 fixed to the fuselage 1 using a separate yoke in the shape of a ring, consisting of the bottom yoke 8 and top yoke 9. The top yoke 9 is permanently fixed to the fuselage 1 and the bottom yoke 8 is fixed releasably. The fuselage 1 is equipped with subassemblies of the telescope for astronomic observations and observations of the earth. The longitudinal axis 12 of the aircraft overlaps the axis of the cylindrical part of the fuselage 1. Engine is installed in the nose 3. The fuselage 1 has a shape of a cylinder with cut out observation cavity at the front the basis of which is formed by the bottom arc section of the fuselage 1 rigidly connected with the nose 3 of the aircraft. The arc section of the fuselage 1 has a recess 13. The observation cavity has the initial angular mirror 2 of the telescope rotary installed to the nose 3. The remaining subassemblies of the telescope, including electromagnetic spectrum detector 4 and main mirror 7, shown in fig. 3, are installed in the cylindrical part of the fuselage 1. The cylindrical part of the fuselage 1 presents tube of the telescope. The electromagnetic spectrum detector 4 recording optical data, nose 3, top mirror 2, fuselage 1 and tail 5 are permanently fixed in relation to each other, forming a rigid construction of the airframe. The main mirror 7 is permanently fixed at the end of the cylindrical part of the fuselage 1 at the tail 5. Axis of rotation of the initial angular mirror 2 overlaps the longitudinal axis 12 of the aircraft and optical axis of the main mirror 7. Recess 13 enables observations of the earth surface after rotation of the initial angular mirror 2 by 180°. The initial angular mirror 2 is rotary fixed in a bearing 10 fixed to the rear part of the nose 3 and controlled using a servomotor 11 installed to the nose 3 construction. The lifting surface 6 consists of left and right wing. The releasably installed bottom yoke 8 allows the reconfiguration of the airframe using wings of different elongations adapted to the profile of the mission and facilitates transport of the aircraft itself.

Version of the aircraft presented in fig. 4, differs with that the cylindrical part of the fuselage 1 is made in the form of double-walled fuel tank 16 connected with the aircraft engine supply system. Fuel fills the narrow cylindrical space between the external and internal jacket of the tank 16, leaving free space inside the internal jacket for the telescope subassemblies. According to this embodiment, fuel present in the double-walled tank 16 can be used as a cooling medium for cooling the main mirror 7. To this end, the double-walled tank 16 is connected with the cooling system 14 of the main mirror 7, as shown in fig. 5 using the pump 1 5. The cooling system 14 and the pump 15 are fixed to the rear non-reflective part of the main mirror 7. Circulation of fuel as a cooling medium is forced by the pump 15.

Water steam in the atmosphere stops the cosmic infrared radiation that can be observed only at altitudes to 11 - 12 thousand meters, when 99% of the water steam is present below. Therefore the need to fly at high altitudes while performing astronomic observations in near infrared. During day flights and with the initial angular mirror oriented downwards, it is possible to take aerial photos with high resolution at different electromagnetic spectrum bands for commercial purposes. This kind of a "flying telescope" for the visible band can be used both by amateur astronomers, using the optics of the commercially available RC telescope, as an amateur instrument for performing observations and astrophotography as well as a professional research instrument of the main mirror diameter in the order of meters for various ranges of electromagnetic waves. High resolution capabilities of the telescope allows for performing reconnaissance missions for military and civil purposes such as monitoring of borders, recognition of targets or search and rescue (SAR) operations.

## Claims

1. An aircraft for performing observations in the stratosphere equipped with a telescope built in a fuselage of the aircraft with an initial angular mirror installed in an open part of the fuselage and a main mirror installed in a cylindrical part of the fuselage, wherein the open part of the fuselage (1) represents an open observation cavity with a base made by a bottom arc section of the fuselage (1) rigidly connected with a nose (3) of the aircraft, the main mirror (7) is permanently fixed at an end of the cylindrical part of the fuselage (1), at a tail (5) of the aircraft, and the initial angular mirror (2) is rotatably fixed to the nose (3), wherein an axis of rotation of the initial angular mirror (2) overlaps a longitudinal axis (12) of the aircraft and an optical axis of the main mirror (7), the bottom arc section of the fuselage (1) has a recess (13) for observation of the earth, and a lifting surface (6) of the aircraft is releasably fixed to the cylindrical part of the fuselage (1).

2. The aircraft according to claim 1 **characterized in that** the initial angular mirror (2) is rotatably fixed in a bearing (10) fixed to a rear part of the nose (3) and is controlled using a servomotor (11) installed to the nose (3).

3. The aircraft according to claim 1 **characterized in that** the lifting surface (6) is fixed to the fuselage (1) using a split yoke in the shape of a ring, consisting of a separately installed bottom yoke (8) and a top yoke (9) permanently fixed to the cylindrical part of the fuselage (1).

4. The aircraft according to claim 1 **characterized in that** the cylindrical part of the fuselage (1) is made in the form of double-walled fuel tank (16) connected with the aircraft engine supply system.

5. The aircraft according to claim 4 **characterized in that** the double-walled fuel tank (16) is connected with a cooling system (14) of the main mirror (7) using a pump (15).

## Patentansprüche

1. Luftfahrzeug zum Durchführen von Beobachtungen in der Stratosphäre, ausgestattet mit einem Teleskop, das in einem Rumpf des Luftfahrzeugs eingebaut ist, mit einem Anfangswinkelspiegel, der in einem offenen Teil des Rumpfs installiert ist, und einem Hauptspiegel, der in einem zylindrischen Teil des Rumpfs installiert ist, wobei der offene Teil des Rumpfes (1) einen offenen Beobachtungshohlraum mit einer Basis darstellt, die durch einen unteren Bogenabschnitt des Rumpfs (1) gebildet wird, der starr mit einer Nase (3) des Luftfahrzeugs verbunden ist, der Hauptspiegel (7) fest an einem Ende des zylindrischen Teils des Rumpfs (1), an einem Heck (5) des Luftfahrzeugs befestigt ist, und der Anfangswinkelspiegel (2) drehbar an der Nase (3) befestigt ist, wobei eine Drehachse des Anfangswinkelspiegels (2) eine Längsachse (12) des Luftfahrzeugs und eine optische Achse des Hauptspiegels (7) überlappt, der untere Bogenabschnitt des Rumpfs (1) eine Aussparung (13) zur Beobachtung der Erde aufweist, und eine Auftriebsfläche (6) des Luftfahrzeugs lösbar an dem zylindrischen Teil des Rumpfs (1) befestigt ist.

2. Luftfahrzeug nach Anspruch 1, **dadurch gekennzeichnet, dass** der Anfangswinkelspiegel (2) drehbar in einem Lager (10) befestigt ist, das an einem hinteren Teil der Nase (3) befestigt ist, und unter Verwendung eines an der Nase (3) installierten Servomotors (11) gesteuert wird.

3. Luftfahrzeug nach Anspruch 1, **dadurch gekennzeichnet, dass** die Auftriebsfläche (6) am Rumpf (1) unter Verwendung eines geteilten Jochs in Form eines Rings befestigt ist, bestehend aus einem separat installierten unteren Joch (8) und einem fest an dem zylindrischen Rumpfteil (1) befestigten oberen Joch (9).

4. Luftfahrzeug nach Anspruch 1, **dadurch gekennzeichnet, dass** der zylindrische Teil des Rumpfs (1) als doppelwandiger Treibstofftank (16) ausgebildet ist, der mit dem Versorgungssystem der Luftfahrzeugtriebwerke verbunden ist.

5. Luftfahrzeug nach Anspruch 4, **dadurch gekennzeichnet, dass** der doppelwandige Treibstofftank (16) über eine Pumpe (15) mit einem Kühlsystem (14) des Hauptspiegels (7) verbunden ist.

## Revendications

1. Aéronef pour effectuer des observations dans la stratosphère, équipé d'un télescope intégré dans un fuselage de l'aéronef avec un miroir d'angle initial installé dans une partie ouverte du fuselage et un miroir principal installé dans une partie cylindrique du fuselage, dans lequel la partie ouverte du fuselage (1) représente une cavité d'observation ouverte avec une base constituée par une section inférieure en arc du fuselage (1) reliée rigidement à un nez (3) de l'aéronef, le miroir principal (7) est fixé à demeure à une extrémité de la partie cylindrique du fuselage (1), à une queue (5) de l'aéronef, et le miroir d'angle initial (2) est fixé en rotation au nez (3), dans lequel un axe de rotation du miroir d'angle initial (2) recouvre un axe longitudinal (12) de l'aéronef et un axe optique du miroir principal (7), la section inférieure en arc du fuselage (1) présente un évidement (13) pour l'observation de la terre, et une surface de levage (6) de l'aéronef est fixée de manière amovible à la partie cylindrique du fuselage (1).

2. Aéronef selon la revendication 1 **caractérisé en ce que** le miroir d'angle initial (2) est fixé en rotation dans un palier (10) fixé à une partie arrière du nez (3) et il est commandé à l'aide d'un servomoteur (11) installé sur le nez (3).

3. Aéronef selon la revendication 1, **caractérisé en ce que** la surface de levage (6) est fixée au fuselage (1) à l'aide d'un joug fendu en forme d'anneau, constitué d'un joug inférieur (8) installé séparément et d'un joug supérieur (9) fixé à demeure à la partie cylindrique du fuselage (1).

4. Aéronef selon la revendication 1 **caractérisé en ce que** la partie cylindrique du fuselage (1) est réalisée sous la forme d'un réservoir à carburant à double paroi (16) relié au système d'alimentation du moteur de l'aéronef.

5. Aéronef selon la revendication 4 **caractérisé en ce que** le réservoir à carburant à double paroi (16) est relié à un système de refroidissement (14) du miroir principal (7) à l'aide d'une pompe (15).
